# EUROPEAN PATENT APPLICATION

(11) **EP 4 807 436 A1**
(43) Date of publication of application: **16.09.2026**
(21) Application number: 25215759.9
(22) Date of filing: 14.11.2025
(51) Int. Cl.: G02F 1/13357, G02F 1/1335

(54) **BACKLIGHT MODULE**

(30) Priority: 12.03.2025 TW 114109247
(71) Applicant: AmTRAN Technology Co., Ltd., Taipei City 23553 (TW)
(72) Inventor: YU, Hung Ta, 23553 New Taipei City (TW)
(74) Representative: Torggler & Hofmann Patentanwälte - Innsbruck

(57) **Abstract**

A backlight module includes at least one light bar structure. The light bar structure is disposed on a side of a metal structure. The light bar structure includes a printed circuit board, a positive contact pad, a negative heat spreader, a plurality of light sources and a connector. The printed circuit board has a plurality of first openings. The positive contact pad is disposed on the printed circuit board. The negative heat spreader is disposed on the printed circuit board and has a plurality of first bending portions. The first bending portions at least partially penetrate through the first openings and contact with the side of the metal structure. The light sources are respectively and electrically connected with the negative heat spreader and the positive contact pad. The connector is electrically connected with the negative heat spreader and the positive contact pad.

## Description

### BACKGROUND

### Field of Invention

The present disclosure relates to backlight modules. More particularly, the present disclosure relates to backlight modules suitable to be used in commercial video conferencing equipment.

### Description of Related Art

In a backlight module of a traditional display device, a light bar is typically fixed to a metal backplate, while the light bar and circuit components of a main circuit board dissipate heat through the metal backplate. Recently, as the number of functional modules used in various commercial display devices has increased, many of these modules also require heat dissipations through the metal backplate, significantly reducing the efficiency of heat dissipations of the backlight module and easily leading to damage to the light bar(s). Therefore, there is an urgent need for a method to improve the heat dissipation performance of backlight modules.

### SUMMARY

A technical aspect of the present disclosure is to provide a backlight module, which can reduce the risk of damage to the light sources due to overheating, and also extend the lifetime of the backlight module. Thus, the overall stability and durability of a display device can be enhanced.

According to an embodiment of the present disclosure, a backlight module includes at least one light bar structure. The light bar structure is disposed on a side of a metal structure. The light bar structure includes a printed circuit board, a positive contact pad, a negative heat spreader, a plurality of light sources and a connector. The printed circuit board has a plurality of first openings. The positive contact pad is disposed on the printed circuit board. The negative heat spreader is disposed on the printed circuit board and has a plurality of first bending portions. The first bending portions at least partially penetrate through the first openings and contact with the side of the metal structure. The light sources are respectively and electrically connected with the negative heat spreader and the positive contact pad. The connector is electrically connected with the negative heat spreader and the positive contact pad.

In one or more embodiments of the present disclosure, the negative heat spreader includes a first body. The first body abuts against the printed circuit board. The first body has a plurality of second openings and a plurality of receiving portions. The first bending portions are connected with the first body and respectively adjacent to a corresponding one of the second openings. The receiving portions are respectively recessed inward from an outer edge of the first body. The first body defines a plurality of conductive zones. The conductive zones are respectively adjacent to a corresponding one of the receiving portions and connected respectively with a corresponding one of the light sources.

In one or more embodiments of the present disclosure, the positive contact pad includes a second body and a plurality of contact portions. The second body abuts against the printed circuit board and is adjacent to the first body. The contact portions are connected with the second body and respectively located at a corresponding one of the receiving portions. The contact portions are respectively connected with a corresponding one of the light sources.

In one or more embodiments of the present disclosure, the light sources are respectively in direct contact with one of the conductive zones and a corresponding one of the contact portions.

In one or more embodiments of the present disclosure, each of the conductive zones is located between adjacent two of the first bending portions.

In one or more embodiments of the present disclosure, the first body has a plurality of first inner edges. The first inner edges define the second openings. Each of the first bending portions a first sub-bending portion and a second sub-bending portion. The first sub-bending portion is away from and substantially parallel to the first body. The second sub-bending portion is connected between the first sub-bending portion and a corresponding one of the first inner edges. The second sub-bending portion extends and abuts against the side of the metal structure.

In one or more embodiments of the present disclosure, the side of the metal structure has a plurality of second inner edges. The second inner edges define a third opening. The first sub-bending portion extends and exceeds one of the second inner edges.

In one or more embodiments of the present disclosure, the side of the metal structure has a second bending portion. The second bending portion extends and at least partially covers the third opening.

In one or more embodiments of the present disclosure, the first sub-bending portions extend relative to the first inner edges. Extended lengths of at least two of the first sub-bending portions are different from each other.

In one or more embodiments of the present disclosure, the first sub-bending portions of adjacent two of the first bending portions with one of the conductive zones located therebetween extend in opposite directions.

In one or more embodiments of the present disclosure, the first body and the positive contact pad are coplanar with each other.

In one or more embodiments of the present disclosure, the first body and the first bending portions are integrally formed.

In one or more embodiments of the present disclosure, the side of the metal structure is spaced apart from the printed circuit board by an air gap.

In one or more embodiments of the present disclosure, a distance of the air gap is ranged between 2 mm and 5 mm.

In one or more embodiments of the present disclosure, the light bar structure includes an insulation layer. The positive contact pad and the negative heat spreader are sandwiched between the printed circuit board and the insulation layer.

In one or more embodiments of the present disclosure, the insulation layer has a plurality of fourth openings. The light sources and the connector are respectively located in the fourth openings of the insulation layer.

In one or more embodiments of the present disclosure, the light sources and the connector penetrate through the insulation layer to connect with the negative heat spreader and the positive contact pad.

In one or more embodiments of the present disclosure, the negative heat spreader is formed from a material with thermal conductivity larger than 150 Watts per meter-Kelvin (W/mK).

According to an embodiment of the present disclosure, a backlight module includes at least one light bar structure. The light bar structure is disposed on a side of a metal structure. The light bar structure includes a printed circuit board, a contact pad, a heat spreader and a plurality of light sources. The printed circuit board has a plurality of first openings. The positive contact pad is disposed on the printed circuit board. The heat spreader is disposed on the printed circuit board and has a plurality of first bending portions. The first bending portions at least partially penetrate through the first openings and contact with the side of the metal structure. The light sources are respectively and directly connected with the heat spreader and the contact pad. The side of the metal structure has a plurality of second bending portions. The first bending portions partially extend and reach under the second bending portions.

In one or more embodiments of the present disclosure, the heat spreader has a first outer edge adjacent to the contact pad. The contact pad has a second outer edge adjacent to the heat spreader. A profile of the first outer edge matches with a profile of the second outer edge.

The above-mentioned embodiments of the present disclosure have at least the following advantages:

(1) Since the negative heat spreader is in direct contact with the light sources, and the first bending portions of the negative heat spreader extend and are at least partially exposed from the third openings of the metal structure, the negative heat spreader can dissipate the heat generated by the light sources through thermal conduction and radiation.

(2) Since there is an air gap between the plate body of the metal structure and the printed circuit board, the light sources can be isolated from the heat source on the back side of the plate body through the air gap, effectively protecting the operational stability and heat dissipation efficiency of the backlight module. Moreover, the air gap provides a heat dissipation convection channel inside the display device, further enhancing the heat dissipation performance.

(3) Through a combination of thermal conduction, convection and radiation as mentioned above, the backlight module can achieve improved heat dissipation performance. This not only prevents damages to the light sources caused by overheating but also extends the lifetime of the backlight module, thereby enhancing the overall stability and durability of the display device.

### BRIEF DESCRIPTION OF THE DRAWINGS

The invention can be more fully understood by reading the following detailed description of the embodiment, with reference made to the accompanying drawings as follows:
Fig. 1 is a schematic view of a backlight module according to an embodiment of the present disclosure;
Fig. 2 is a partially exploded view of the backlight module of Fig. 1;
Fig. 3 is a sectional view along the sectional line A-A of Fig. 1;
Fig. 4 is a sectional view along the sectional line B-B of Fig. 1;
Fig. 5 is a schematic view of assembly of the backlight module of Fig. 1;
Fig. 6 is a schematic sectional view along the sectional line C-C of Fig. 1;
Fig. 7 is a schematic view illustrating the application of the backlight module of Fig. 1; and
Fig. 8 is a sectional view of a backlight module according to another embodiment of the present disclosure.

### DETAILED DESCRIPTION

Drawings will be used below to disclose embodiments of the present disclosure. For the sake of clear illustration, many practical details will be explained together in the description below. However, it is appreciated that the practical details should not be used to limit the claimed scope. In other words, in some embodiments of the present disclosure, the practical details are not essential. Moreover, for the sake of drawing simplification, some customary structures and elements in the drawings will be schematically shown in a simplified way. Wherever possible, the same reference numbers are used in the drawings and the description to refer to the same or like parts.

Unless otherwise defined, all terms (including technical and scientific terms) used herein have the same meanings as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

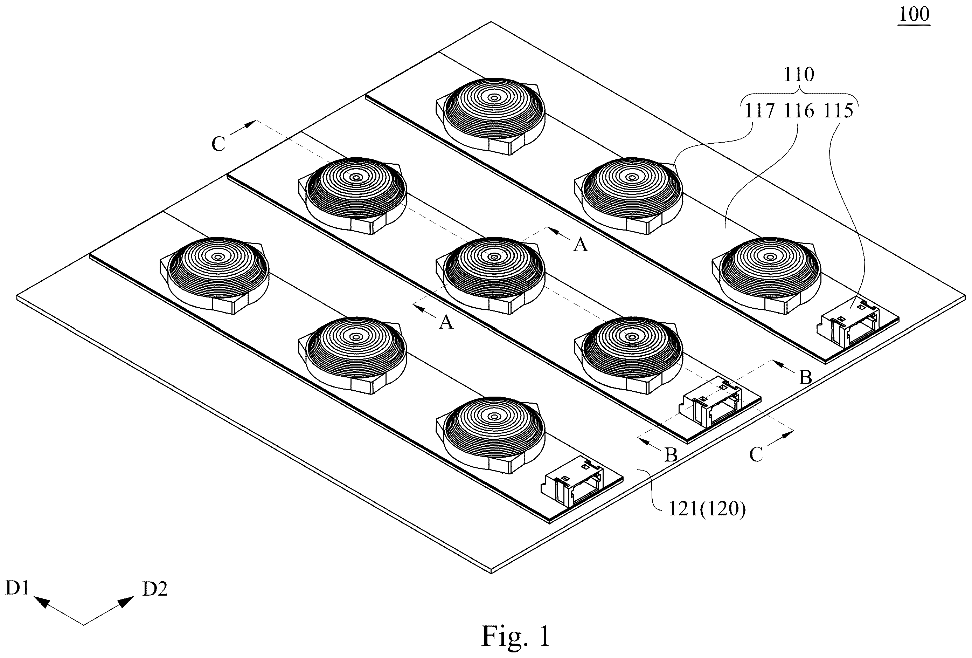

Reference is made to Fig. 1. Fig. 1 is a schematic view of a backlight module 100 according to an embodiment of the present disclosure. In this embodiment, as shown in Fig. 1, a backlight module 100 includes a plurality of light bar structures 110 and a metal structure 120. The light bar structures 110 are disposed on a side of the metal structure 120, which is a front side of a plate body 121 of the metal structure 120. Each of the light bar structures 110 extends along a first direction D1, while the light bar structures 110 are arranged along a second direction D2, in which the first direction D1 is perpendicular to the second direction D2. However, this does not intend to limit the present disclosure. At least one of the light bar structures 110 may extend along the first direction D1 and also the second direction D2 to form a light board. In addition, the backlight module 100 may have only one piece of the light bar structure 110 or a plurality of light bar structures 110 with different shapes.

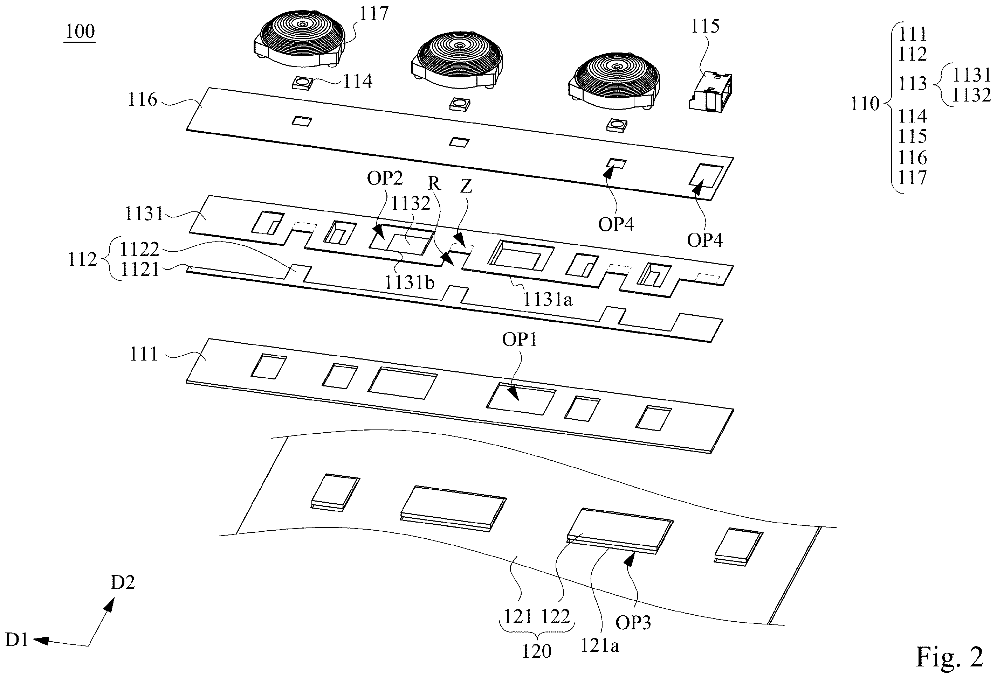

Reference is made to Fig. 2. Fig. 2 is a partially exploded view of the backlight module 100 of Fig. 1. In this embodiment, as shown in Fig. 2, a light bar structure 110 includes a printed circuit board 111, a positive contact pad 112, a negative heat spreader 113, a plurality of light sources 114, a plurality of lenses 117, a connector 115 and an insulation layer 116. The light sources 114 can be various types of light-emitting diodes. The lenses 117 cover on top of the light sources 114 for adjusting the directions of light emitted by the light sources 114, in order to enhance the optical performance. However, this does not intend to limit the present disclosure. At least one of the light bar structures 110 may have the light sources 114 without the lenses 117. The positive contact pad 112 and the negative heat spreader 113 are disposed on the printed circuit board 111. The insulation layer 116 covers the positive contact pad 112 and the negative heat spreader 113, such that the positive contact pad 112 and the negative heat spreader 113 are sandwiched between the printed circuit board 111 and the insulation layer 116. The printed circuit board 111 is made of a rigid material, which provides a sound structural strength to the light bar structure 110, such that the light bar structure 110 can be modularized. A bottom insulation layer is formed at the bottom of the printed circuit board 111. Moreover, the printed circuit board 111 has a plurality of first openings OP1. The negative heat spreader 113 has a plurality of first bending portions 1132. The first bending portions 1132 are configured to at least partially penetrate through the first openings OP1 of the printed circuit board 111. The insulation layer 116 has a plurality of fourth openings OP4. The light sources 114 and the connector 115 are respectively located in the fourth openings OP4 of the insulation layer 116, and may pass through the insulation layer 116 to connect with the negative heat spreader 113 and the positive contact pad 112. The connector 115 is configured to connect with an external power source or controller (not shown), so as to conduct electricity to drive the light sources 114 to emit light.

In some embodiments, a material of the negative heat spreader 113 has a high thermal conductivity with a value larger than 150 Watts per meter-Kelvin (W/mK). In other words, the negative heat spreader 113 is made of a material with high thermal conductivity. For example, the negative heat spreader 113 can be made of oxygen-free copper CU1100, high-purity aluminum AL1050 or high-thermal-conductivity metallic material coated with graphene. However, this does not intend to limit the present disclosure.

To be specific, as shown in Fig. 2, the negative heat spreader 113 further includes a first body 1131. The first body 1131 is configured to abut against the printed circuit board 111. The first body 1131 has a plurality of first inner edges 1131b and a plurality of receiving portions R. The first inner edges 1131b define a plurality of second openings OP2. In practice, the first body 1131 and the first bending portions 1132 are integrally formed as one piece, and the first bending portions 1132 are respectively connected with the first inner edges 1131b, i.e., the first bending portions 1132 are respectively adjacent to the second openings OP2. Each of the receiving portions R is respectively recessed inward from an outer edge 1131a of the first body 1131. The first body 1131 defines a plurality of conductive zones Z. The conductive zones Z are respectively adjacent to a corresponding one of the receiving portions R and connected respectively with a corresponding one of the light sources 114. In other words, the conductive zones Z respectively correspond to the fourth openings OP4 of the insulation layer 116. On the other hand, the positive contact pad 112 includes a second body 1121 and a plurality of contact portions 1122. The second body 1121 is configured to abut against the printed circuit board 111 and is adjacent to the first body 1131. The contact portions 1122 are connected with the second body 1121 and respectively located at a corresponding one of the receiving portions R of the first body 1131. The contact portions 1122 are respectively connected with a corresponding one of the light sources 114. In other words, the contact portions 1122 respectively correspond to the fourth openings OP4 of the insulation layer 116 and the receiving portions R of the negative heat spreader 113.

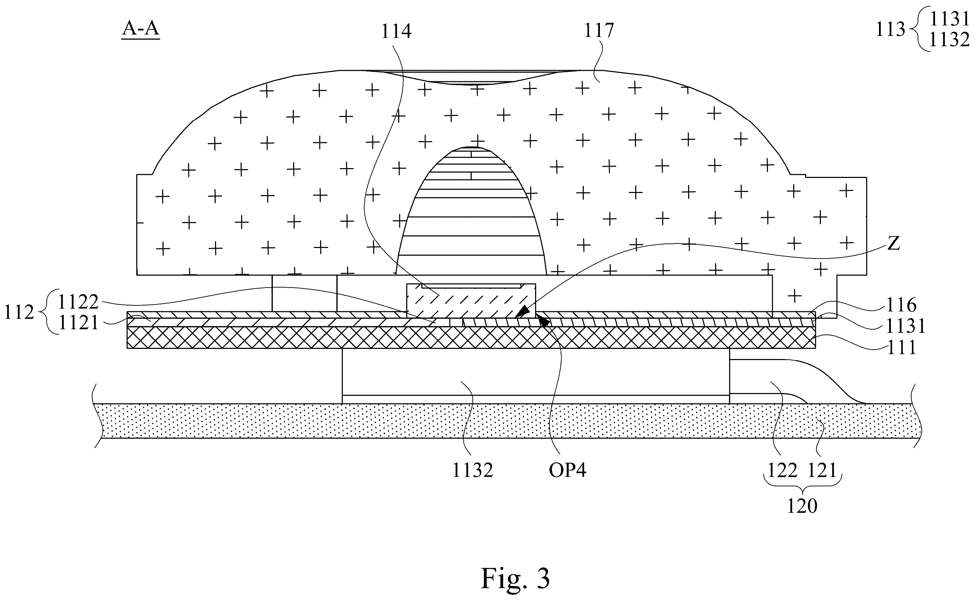

Reference is made to Fig. 3. Fig. 3 is a sectional view along the sectional line A-A of Fig. 1. In this embodiment, as shown in Fig. 3, the light source 114 is in direct contact with the conductive zone Z of the negative heat spreader 113 and also the contact portion 1122 of the positive contact pad 112, thereby electrically connected with the negative heat spreader 113 and the positive contact pad 112. During the operation of the backlight module 100, electric current flows from the positive contact pad 112 to the negative heat spreader 113 through the light source 114, so the light source 114 is powered to emit light.

However, depending on the actual configurations, the light source 114 may be in direct contact with the conductive zone Z of the negative heat spreader 113 and the contact portion 1122 of the positive contact pad 112, but is not electrically connected with the negative heat spreader 113 and the positive contact pad 112. In other words, the light source 114 is electrically insulated from the negative heat spreader 113 and the positive contact pad 112. Under such configuration, the negative heat spreader 113 merely provides an effect of heat dissipation to the light source 114, while the positive contact pad 112 does not provide electric power to the light source 114. Instead, the light source 114 is electrically connected with other power source (not shown).

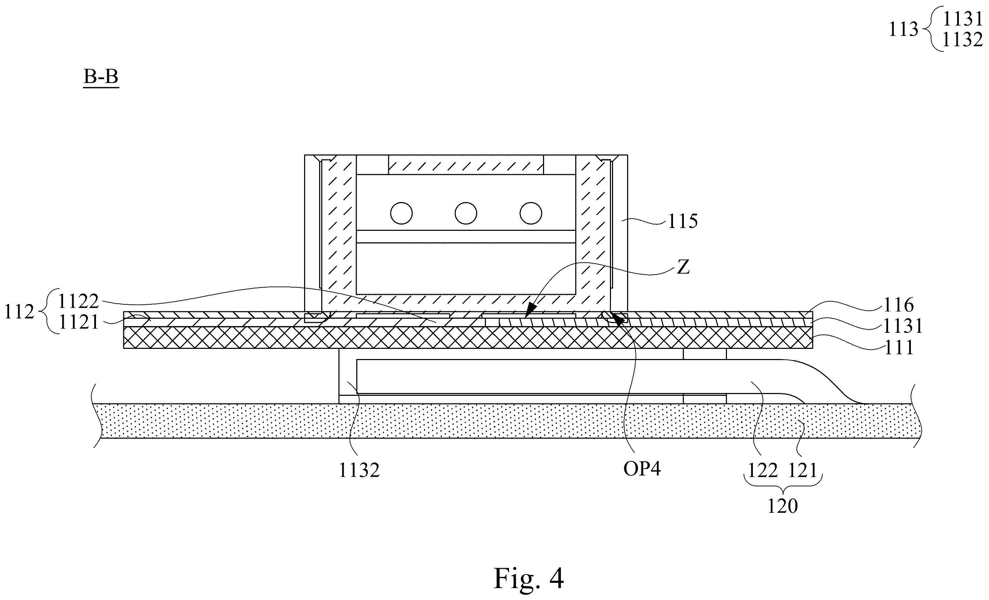

Reference is made to Fig. 4. Fig. 4 is a sectional view along the sectional line B-B of Fig. 1. In this embodiment, as shown in Fig. 4, the connector 115 passes through the fourth opening OP4 of the insulation layer 116 to directly contact with the conductive zone Z of the negative heat spreader 113 and also the contact portion 1122 of the positive contact pad 112, thereby the connector 115, which receives the power supplied to the light source 114, is electrically connected with the negative heat spreader 113 and the positive contact pad 112.

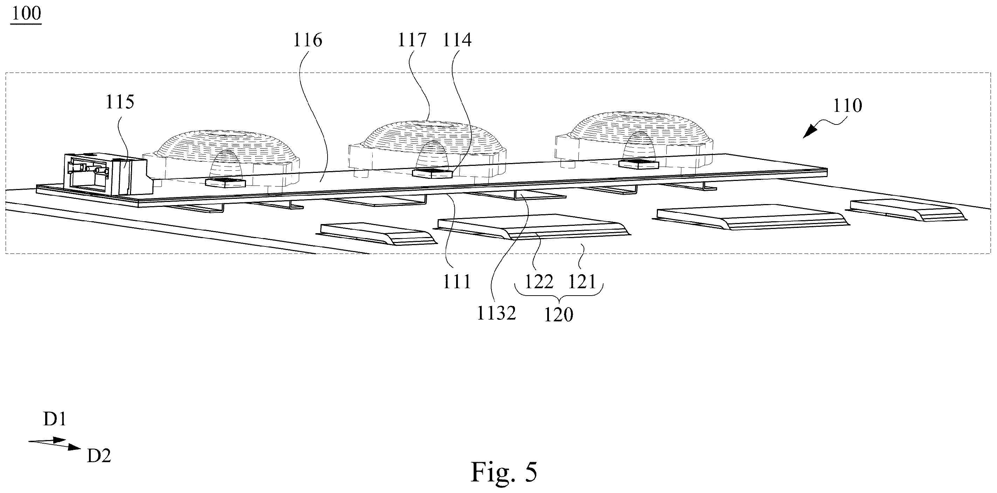

Reference is made to Fig. 5. Fig. 5 is a schematic view of assembly of the backlight module 100 of Fig. 1. In this embodiment, as shown in Fig. 2 and Fig. 5, the metal structure 120 is practically a backplate of a direct-lit backlight module, and the backplate includes a plate body 121 and a plurality of second bending portions 122. The second bending portions 122 are connected with the plate body 121. In practice, the second bending portions 122 and the plate body 121 are integrally formed as one piece. After the first bending portions 1132 of the negative heat spreader 113 pass through the first openings OP1 of the printed circuit board 111, the light bar structure 110 is moved towards the second bending portions 122 of the metal structure 120 along the second direction D2, such that the first bending portions 1132 align with the second bending portions 122. As shown in Fig. 5, in some embodiments, the first bending portions 1132 are inserted into the gaps of the second bending portions 122, thereby securing the light bar structure 110 to the metal structure 120. In an embodiment of the present disclosure, the metal structure 120 may be located at a lateral side of an edge-lit backlight module, wherein the metal structure 120 similarly has a plate body 121 and a plurality of second bending portions 122 integrally formed with the plate body 121 as one piece. In an embodiment of the present disclosure, the metal structure 120 may also be formed at other locations where the light bar structure 110 can be installed, and is not limited to backlight modules.

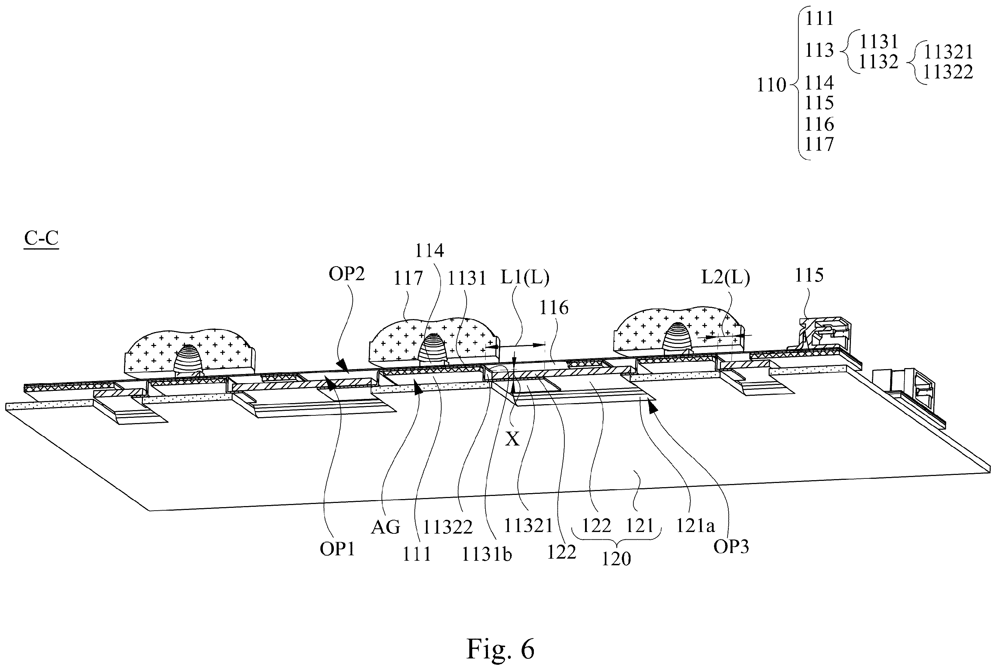

Reference is made to Fig. 6. Fig. 6 is a schematic sectional view along the sectional line C-C of Fig. 1. In this embodiment, as shown in Fig. 6, each of the first bending portions 1132 includes a first sub-bending portion 11321 and a second sub-bending portion 11322. The first sub-bending portions 11321 are away from and substantially parallel to the first body 1131. Each of the second sub-bending portions 11322 is connected between a first sub-bending portion 11321 and a first inner edge 1131b of the first body 1131. In some embodiments, the extending direction of the first sub-bending portions 11321 is substantially perpendicular to the extending direction of the second sub-bending portions 11322. The second sub-bending portions 11322 extend to contact a front side of the plate body 121 of the metal structure 120. The first sub-bending portions 11321 extend along the plate body 121 of the metal structure 120. On the other hand, the plate body 121 of the metal structure 120 has a plurality of second inner edges 121a, and the second inner edges 121a define third openings OP3. Each of the third openings OP3 at least partially corresponds to one of the first sub-bending portions 11321 and one of the second bending portions 122 of the metal structure 120. That is, each of the first sub-bending portions 11321 partially contacts with the plate body 121 of the metal structure 120 and extends beyond one of the second inner edges 121a, such that the first sub-bending portions 11321 partially extend above the third openings OP3 and below the second bending portions 122 respectively. Each second bending portion 122 of the metal structure 120 is connected with one of the second inner edges 121a, and extends over one of the third openings OP3 and a portion of one of the first bending portions 1132. In some embodiments, the extending portions of the second bending portions 122 of the metal structure 120 are substantially parallel to the extended portions of the first sub-bending portions 11321 of the first bending portions 1132. In some embodiments, the extending portions of the second bending portions 122 of the metal structure 120 may partially abut against the first sub-bending portions 11321 or the second sub-bending portions 11322.

During the operation of the backlight module 100, the light sources 114 are powered to emit light, which keeps generating heat. The heat is conducted from the conductive zone Z to the first body 1131 of the negative heat spreader 113, and then to the metal structure 120 through the first bending portions 1132. Since the negative heat spreader 113 is made of high thermally conductive material, the heat generated by the light sources 114 can be quickly conducted and dissipated, which prevents heat accumulation at the light sources 114 and avoids damage or reduction of lifetime of the light sources 114 due to overheating. Moreover, as shown in Fig. 2, each of the conductive zones Z is located between two adjacent second openings OP2. That is, each of the light sources 114 is located between two adjacent first bending portions 1132. In this way, the efficiency of the negative heat spreader 113 conducting the heat generated by the light sources 114 can be further enhanced.

In addition, as mentioned above, the first sub-bending portion 11321 of the first bending portions 1132 are at least partially exposed at the third openings OP3 of the metal structure 120, which facilitates radiative heat dissipations of the first sub-bending portions 11321 through the third openings OP3. Moreover, the light sources 114 can be prevented from absorbing the heat generated by the circuit components disposed on the back side of the plate body 121.

Furthermore, as shown in Fig. 6, the plate body 121 of the metal structure 120 is spaced apart from the printed circuit board 111 by a distance X, which defines an air gap AG. In order to achieve optimal effect of heat convection, in this embodiment, the distance X is ranged between 2 mm and 5 mm.

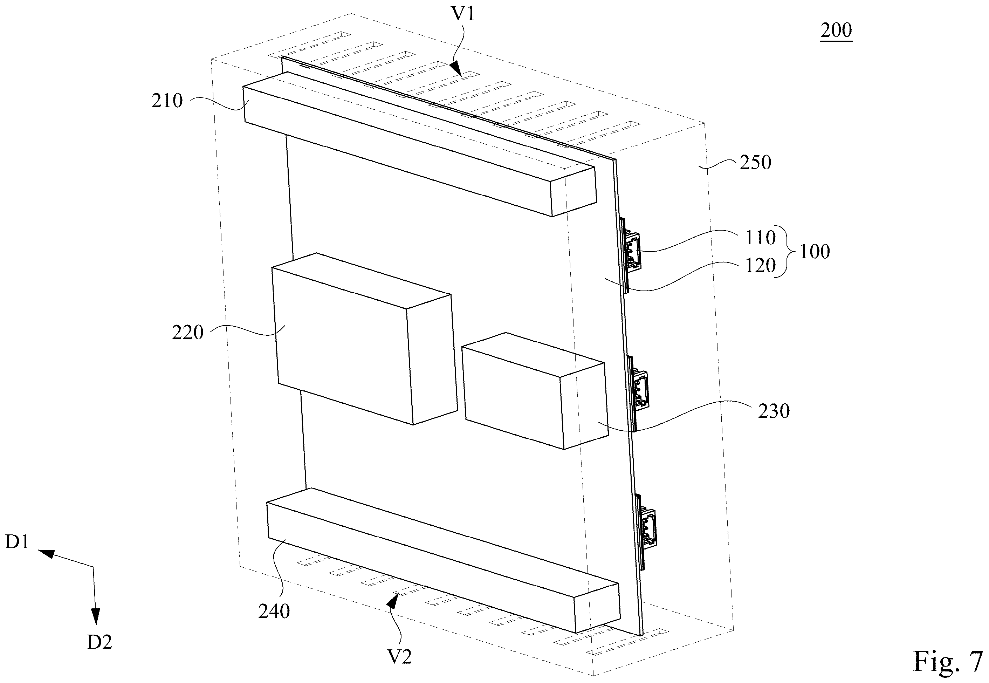

Reference is made to Fig. 7. Fig. 7 is a schematic view illustrating the application of the backlight module 100 of Fig. 1. In this embodiment, as shown in Fig. 7, the backlight module 100 is disposed inside the housing 250 of a display device 200, and the display device 200 is, for example, commercial video conferencing equipment. Generally, in the internal structure of the display device 200, circuit components, including camera module, speaker, driver controller 210, power supply module 220, motherboard 230, and signal source board 240, are typically disposed on the back side of the plate body 121, i.e., the side of the metal structure 120 away from the light sources 114. These circuit components continuously generate heat during operation. However, since the air gap AG (please see Fig. 6) exists between the plate body 121 of the metal structure 120 and the printed circuit board 111 of the light bar structure 110 in the backlight module 100, the light sources 114 can be thermally isolated from the heat sources on the back side of the plate body 121 by the air gap AG. This effectively protects the operational stability and heat dissipation performance of the backlight module 100.

Moreover, as shown in Fig. 7, the air gaps AG of the light bar structure 110 provide a heat dissipation convection channel along the second direction D2. Specifically, external air can enter the housing 250 of the display device 200 through the bottom ventilation openings V2, which forms thermal convection within the air gaps AG arranged along the second direction D2. The heat is carried away by the airflow through the top ventilation openings V1 of the housing 250, thereby enhancing the effect of heat dissipation. In other words, the housing 250 has top ventilation openings V1 and bottom ventilation openings V2 on opposite sides, and multiple air gaps AG are formed between the light bar structures 110 and the plate body 121, wherein the air gaps AG aligned in a direction communicating the top ventilation openings V1 and the bottom ventilation openings V2 of the housing 250.

Through a combination of thermal conduction, convection and radiation as mentioned above, the backlight module 100 can achieve improved heat dissipation performance. This not only prevents damages to the light sources 114 caused by overheating but also extends the lifetime of the backlight module 100, thereby enhancing the overall stability and durability of the display device 200.

It is worth noting that, during the operation of the display device 200, the circuit components disposed on the back side of the plate body 121 within the display device 200 generate varying amounts of heat. Therefore, as shown in Fig. 6, the first sub-bending portions 11321 have extended length L relative to the first inner edges 1131b or the second sub-bending portions 11322, in which at least two of the first sub-bending portions 11321 have different extended lengths L. Depending on the position of the light bar structure 110 at the front side of the plate body 121, if one of the light sources 114 aligns to a heat source on the back side of the plate body 121 which generates a relatively large amount of heat, the adjacent first sub-bending portion 11321 may have a longer extended length L. For example, as shown in Fig. 6, corresponding to the heating conditions of different modules, the first sub-bending portion 11321 adjacent to the central light source 114 has an extended length L1, and the first sub-bending portion 11321 adjacent to the right light source 114 has an extended length L2. The extended length L1 is greater than the extended length L2. In some embodiments, besides the different extended lengths L of the first sub-bending portions 11321, there are only some of the light sources 114 of the light bar structures 110 provided with negative heat spreaders 113 corresponding to the second bending portion 122 and the third opening OP3 of the metal structure 120, while other light sources 114 are not provided with the negative heat spreaders 113 or the first bending portions 1132, such as the light source 114 not requiring enhanced heat dissipation or at a location far from the heat sources.

By varying the extended lengths L of the first sub-bending portions 11321, the lifetimes of the light sources 114 at different positions can be improved, and the lifetime curves and luminous decay rates of all light sources 114 in the backlight module 100 can be more consistent. This ensures that the brightness of the backlight module 100 remains uniform after long-term operations, significantly enhancing the reliability of the backlight module 100.

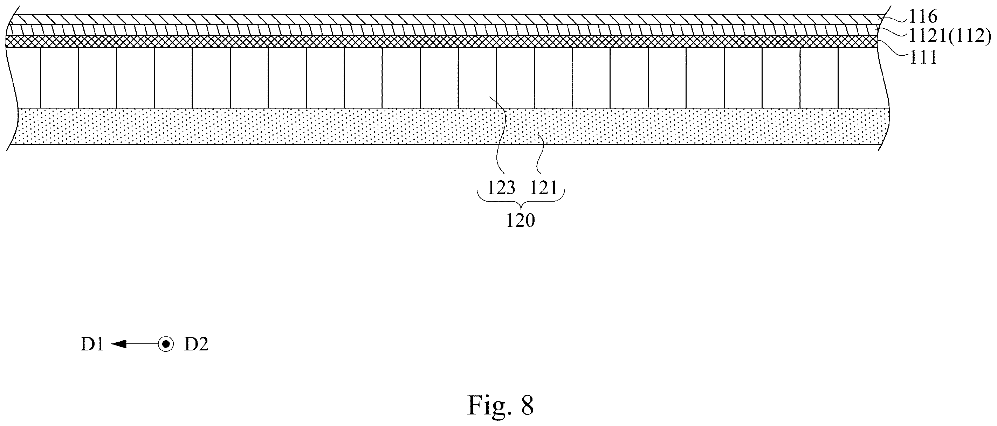

Reference is made to Fig. 8. Fig. 8 is a sectional view of a backlight module 100 according to another embodiment of the present disclosure. In this embodiment, as shown in Fig. 8, the metal structure 120 further includes a plurality of heat dissipation fins 123. The heat dissipation fins 123 are disposed on the plate body 121 and in contact with the printed circuit board 111 of the light bar structure 110. The heat dissipation fins 123 are at least partially arranged along the first direction D1 and respectively extend along the second direction D2, in order to further enhance heat dissipation performance of the backlight module 100. In some embodiments, the heat dissipation fins 123 may be disposed below the bottom insulation layer of the printed circuit board 111 and in contact with the plate body 121. In some embodiments, the heat dissipation fins 123 are disposed only between a portion of the plate body 121 and a portion of the printed circuit board 111, such as at positions requiring enhanced heat dissipation or near heat sources. In some embodiments, the heat dissipation fins 123 may coexist with aforementioned structures, such as the negative heat spreader 113, the second bending portions 122 and the third opening OP3. For example, the heat dissipation fins 123 may be located in the air gaps AG at positions bypassing the negative heat spreader 113, the second bending portions 122 and the third openings OP3. Alternatively, some light sources 114 of the light bar structures 110 may be provided with the negative heat spreader 113 corresponding to the second bending portions 122 and the third openings OP3 of the metal structure 120, while other light sources 114 correspond to the heat dissipation fins 123 of the metal structure 120. In some embodiments, the extending direction of the heat dissipation fins 123 is same as the communication direction of the air gaps AG, thereby forming thermal convection channels.

In conclusion, the aforementioned embodiments of the present disclosure have at least the following advantages:
(1) Since the negative heat spreader is in direct contact with the light sources, and the first bending portions of the negative heat spreader extend and are at least partially exposed from the third openings of the metal structure, the negative heat spreader can dissipate the heat generated by the light sources through thermal conduction and radiation.
(2) Since there is an air gap between the plate body of the metal structure and the printed circuit board, the light sources can be isolated from the heat source on the back side of the plate body through the air gap, effectively protecting the operational stability and heat dissipation efficiency of the backlight module. Moreover, the air gap provides a heat dissipation convection channel inside the display device, further enhancing the heat dissipation performance.
(3) Through a combination of thermal conduction, convection and radiation as mentioned above, the backlight module can achieve improved heat dissipation performance. This not only prevents damages to the light sources caused by overheating but also extends the lifetime of the backlight module, thereby enhancing the overall stability and durability of the display device.

## Claims

1. A backlight module (100), comprising:
at least one light bar structure (110) disposed on a side of a metal structure (120), the light bar structure (110) comprising:
a printed circuit board (111) having a plurality of first openings (OP1);
a positive contact pad (112) disposed on the printed circuit board (111);
a negative heat spreader (113) disposed on the printed circuit board (111) and having a plurality of first bending portions (1132) at least partially penetrating through the first openings (OP1) and contacting with the side of the metal structure (120);
a plurality of light sources (114) respectively and electrically connected with the negative heat spreader (113) and the positive contact pad (112); and
a connector (115) electrically connected with the negative heat spreader (113) and the positive contact pad (112).

2. The backlight module (100) of claim 1, wherein the negative heat spreader (113) comprises:
a first body (1131) abutted against the printed circuit board (111) and having a plurality of second openings (OP2) and a plurality of receiving portions (R), the first bending portions (1132) are connected with the first body (1131) and respectively adjacent to a corresponding one of the second openings (OP2), the receiving portions (R) are respectively recessed inward from an outer edge (1131a) of the first body (1131), the first body (1131) defines a plurality of conductive zones (Z) being respectively adjacent to a corresponding one of the receiving portions (R) and connecting respectively with a corresponding one of the light sources (114).

3. The backlight module (100) of claim 2, wherein the positive contact pad (112) comprises:
a second body (1121) abutting against the printed circuit board (111) and is adjacent to the first body (1131); and
a plurality of contact portions (1122) connected with the second body (1121) and respectively located at a corresponding one of the receiving portions (R), the contact portions (1122) are respectively connected with a corresponding one of the light sources (114).

4. The backlight module (100) of claim 3, wherein the light sources (114) are respectively in direct contact with one of the conductive zones (Z) and a corresponding one of the contact portions (1122).

5. The backlight module (100) of claim 2, wherein each of the conductive zones (Z) is located between adjacent two of the first bending portions (1132).

6. The backlight module (100) of claim 2, wherein the first body (1131) has a plurality of first inner edges (1131b) defining the second openings (OP2), each of the first bending portions (1132) comprises:
a first sub-bending portion (11321) being away from and substantially parallel to the first body (1131); and
a second sub-bending portion (11322) connected between the first sub-bending portion (11321) and a corresponding one of the first inner edges (1131b),
wherein the second sub-bending portion (11322) extends and abuts against the side of the metal structure (120).

7. The backlight module (100) of claim 6, wherein the side of the metal structure (120) has a plurality of second inner edges (121a), the second inner edges (121a) define a third opening (OP3), the first sub-bending portion (11321) extends and exceeds one of the second inner edges (121a).

8. The backlight module (100) of claim 7, wherein the side of the metal structure (120) has a second bending portion (122), the second bending portion (122) extends and at least partially covers the third opening (OP3).

9. The backlight module (100) of claim 6, wherein the first sub-bending portions (11321) extend relative to the first inner edges (1131b), extended lengths (L) of at least two of the first sub-bending portions (11321) are different from each other.

10. The backlight module (100) of claim 6, wherein the first sub-bending portions (11321) of adjacent two of the first bending portions (1132) with one of the conductive zones (Z) located therebetween extend in opposite directions.

11. The backlight module (100) of claim 2, wherein the first body (1131) and the positive contact pad (112) are coplanar with each other.

12. The backlight module (100) of claim 1, wherein the side of the metal structure (120) is spaced apart from the printed circuit board (111) by an air gap (AG), a distance of the air gap (AG) is ranged between 2 mm and 5 mm.

13. The backlight module (100) of claim 1, wherein the light bar structure (110) comprises:
an insulation layer (116), the positive contact pad (112) and the negative heat spreader (113) are sandwiched between the printed circuit board (111) and the insulation layer (116).

14. The backlight module (100) of claim 13, wherein the insulation layer (116) has a plurality of fourth openings (OP4), the light sources (114) and the connector (115) penetrate through the insulation layer (116) and are respectively located in the fourth openings (OP4) of the insulation layer (116) to connect with the negative heat spreader (113) and the positive contact pad (112).

15. The backlight module (100) of claim 1, wherein the negative heat spreader (113) is formed from a material with thermal conductivity larger than 150 Watts per meter-Kelvin (W/mK).
